# EUROPEAN PATENT SPECIFICATION

(11) **EP 1 930 631 B1**
(45) Date of publication and mention of the grant of the patent: **13.06.2012**
(21) Application number: 07254697.1
(22) Date of filing: 04.12.2007
(51) Int. Cl.: F16H 59/70, B60W 50/08, F16H 63/42, F16H 59/68

(54) **Gear position determination apparatus for manual transmission, gear-shift prompting apparatus for vehicle and method therefore**
Gangpositionsbestimmungsvorrichtung für Handschaltgetriebe, Gangschaltungsaufforderungsvorrichtung für Fahrzeuge und Verfahren dafür
Appareil de détermination de position de rapport de vitesse pour transmission manuelle, appareil d'avertissement de changement de vitesse et procédé associé

(30) Priority: 05.12.2006 JP 2006327772
(43) Date of publication of application: 11.06.2008
(73) Proprietor: Toyota Jidosha Kabushiki Kaisha, Aichi-ken, 471-8571 (JP)
(72) Inventor: Kinoshita, Tomonori c/o Toyota Jidosha Kabushiki Kaisha, Toyota-shi, Aichi-ken 471-8571 (JP)
(74) Representative: Harris, Ian Richard

(56) References cited:
- US-A- 4 803 898
- US-A- 5 436 833
- US-A- 5 921 135
- US-A1- 2006 234 831
- US-B1- 6 345 216

## Description

### BACKGROUND OF THE INVENTION

### 1. Field of the Invention

The invention relates to a gear position determining apparatus that determines the gear position (i.e., the position of the shift lever) of a manual transmission provided in a vehicle. The invention also relates to a gear-shift prompting apparatus, and method, that prompts a driver to change gears. The gear-shift prompting apparatus, or method, provides instructions according to the determination made by the gear position determining apparatus.

### 2. Description of the Related Art

Conventionally, the rotational speed of an engine (internal combustion engine) is changed by a transmission, and the changed rotational speed is transmitted to the drive wheels to achieve the necessary torque to drive the vehicle at an appropriate speed. The optimum gear for the traveling state of the vehicle is substantially determined based on, for example, the vehicle speed and an engine load (for example, an accelerator-pedal operation degree). For example, in a vehicle equipped with an automatic transmission, a shift map is stored in a controller, and the gear is automatically shifted according to the shift map. In the shift map, shift lines (i.e., the lines for gear shifts) are provided so that the optimum gear is determined according to the vehicle speed and accelerator-pedal operation degree.

However, in a vehicle equipped with a manual transmission, because the driver may freely select a gear, selection of the gear and a timing at which the shift operation is performed greatly differs between individuals. Therefore, it is very likely that the optimum gear may no be selected when the vehicle travels. For example, when the driver may upshift into a higher gear that is still lower than the optimum gear for a given situation, fuel efficiency deteriorates. Conversely, when a gear that is higher than the optimum gear is selected, sufficient acceleration is not possible.

To address such problems, for example, each of Japanese Patent Application Publications No. 2003-19912 (JP-A-2003-19912 & EP 1 253 354) and No. 5-180339 (JP-A-5-180339) describes a gear-shift prompting apparatus that prompts a driver to shift to the optimum gear based on, for example, the engine load and the vehicle speed, when a gear that differs from the optimum gear is selected.

More specifically, a shift map, which is substantially the same as the shift map used for the automatic transmission, is stored in a controller. When the gear selected by the driver differs from the optimum gear determined based on the traveling state of the vehicle, the gear-shift prompting apparatus visually prompts the driver to upshift or downshift according to the shift map. For example, a display portion that prompts the driver to shift to a higher gear position or a lower gear position, as appropriate, may be provided in an instrument cluster in the passenger compartment. The gear-shift prompting apparatus prompts the driver to change gears by turning on the display portion according to the traveling state of the vehicle. The transmission to which the gear-shift prompting apparatus is applied is not limited to the manual transmission. The gear-shift prompting apparatus may be applied to a vehicle equipped with an automatic transmission that has a manual shift function (e.g., an automatic transmission that has a sequential shift mode).

The above-described gear-shift prompting apparatus provides the prompt relating to a gear shift (hereinafter, referred to as "gear-shift prompt") according to only the optimum gear determined based on the engine load and vehicle speed. Thus, when the driver places a shift lever in a neutral position and the transmission is in neutral, the gear-shift prompt is provided according to, for example, the engine load and the vehicle speed. That is, although the driver places the shift lever in the neutral position, and the driver wants to stop the vehicle or wants the vehicle to coast, the gear-shift prompting apparatus continues providing the gear-shift prompt. This may confuse or annoy the driver.

Therefore, when the transmission is in neutral, it is desirable to determine that the transmission is in neutral, and to stop providing the gear-shift prompt (i.e., to turn off the display portion).

Japanese Patent Application Publication No. 62-94428 (JP-A-62-94428) describes a technology in which a neutral switch is provided to indicate that a transmission is in neutral. The neutral switch is turned on when the transmission is in neutral.

In this case, however, it is necessary to additionally provide a neutral switch, and a signal line to transmit a neutral detection signal to an ECU. This increases the production cost, and complicates the configuration of the transmission.

Japanese Patent Application Publication No. 4-171352 (JP-A-4-171352) describes a technology that determines whether a transmission is in neutral without the need of providing the neutral switch. In the JP-A-4-171352, the gear position of the transmission is determined based on the amount of change in a ratio N:V between the engine speed (N) and the vehicle speed (V). When the transmission is in neutral, the driving force output from an engine is not transmitted to wheels, and the vehicle speed decreases in a short time. Accordingly, it can be determined that the transmission is in neutral when the amount of change in the N:V ratio per unit time exceeds a predetermined threshold value.

In the technology described in the publication No. 4-171352, it is determined that the transmission is in neutral when the amount of change in the N:V ratio per unit time exceeds the predetermined threshold value. In this technology, however, the following problems occur.

When the vehicle travels on a gradual downward slope, and the driver places the shift lever in the neutral position, and accordingly the transmission is in neutral, the vehicle maintains a substantially constant speed. In other words, the amount of change in the vehicle speed per unit time is small. In this situation, the amount of change in the N:V ratio per unit time does not exceed the threshold value. Therefore, although the transmission is in neutral, it is not determined that the transmission is in neutral. As a result, the gear-shift prompting apparatus continues to provide the gear-shift prompt based on, for example, the engine load and the vehicle speed. This may confuse or annoy the driver.

If the threshold value of the amount of change in the N:V ratio per unit time is used to determine whether the transmission is in neutral is set to a low value, it is possible to determine that the transmission is in neutral even when the amount of change in the vehicle speed is small.

However, if the driver moves the shift lever from one gear position to another gear position, the transmission is transiently in neutral and the vehicle speed slightly changes. Therefore, it may be determined that the transmission is in neutral in response to the slight change in the vehicle speed. That is, when the driver performs an ordinary shift operation (the upshift operation or the downshift operation), the gear-shift prompting apparatus stops providing the shift prompt (i.e., the display portion is turned off). This may also confuse or annoy the driver.
Generic US 5921135 discloses a method and a circuit configuration for gear detection in a motor vehicle transmission which detects a signal corresponding to an input rpm and a signal corresponding to an output rpm of the transmission and determines that no gear is engaged if the N/V ratio varies and the clutch is closed. US 4803898 discloses an apparatus for detecting a neutral state of a transmission gear of a vehicle.

### SUMMARY OF THE INVENTION

The invention provides a gear position determination apparatus that accurately determines whether the gear position of a manual transmission is a neutral position (the phrase "the gear position of the manual transmission is the neutral position" does not include the time that the manual transmission is transiently in neutral during a shift operation. The phrase signifies that the manual transmission remains in neutral). The invention also provides a gear-shift prompting apparatus for a vehicle, or a gear-shift prompting method, which stops providing a gear-shift prompt to a driver when it is determined that the transmission is neutral.

According to one aspect of the invention, the principle for solving the problems is as follows. Whether the manual transmission is in neutral may be determined based on the change in the estimated gear of the manual transmission and an operation to disengage and engage a clutch mechanism. Thus, the manual transmission may be determined to be in neutral even under circumstance where the manual transmission would not be determined to be in neutral according to the amount of change in the above-described N:V ratio per unit time. The gear-shift prompting apparatus may operate based on the determination that the manual transmission is in neutral. In this case, when it is determined that the manual transmission is in neutral, the gear-shift prompting apparatus stops providing the gear-shift prompt. This prevents the gear-shift prompting apparatus from unnecessarily providing the gear-shift prompt.

More specifically, a first aspect of the invention relates to a gear position determination apparatus for a manual transmission that is connected to the output shaft of an internal combustion engine via a clutch mechanism, and the gear position determination apparatus determines the current gear position of the manual transmission. The gear position determination apparatus includes gear position estimation means for estimating the gear position of the manual transmission; and neutral determination means for determining whether the manual transmission is in neutral. The neutral determination means determines that the manual transmission is in neutral if an operation to disengage and engage the clutch mechanism is not performed when the gear position estimated by the gear position estimation means changes.

In the above configuration, when the gear position estimation means estimates the gear position of the manual transmission, if an operation to disengage and engage the clutch mechanism is not performed when the gear position estimated by the gear position estimation means changes, the neutral determination means determines that the manual transmission is in neutral. More specifically, when the manual shift operation is performed, the clutch mechanism is disengaged and engaged when the estimated gear position changes. For example, when the manual transmission is upshifted from second gear to third gear, the clutch mechanism is disengaged and engaged (i.e., a clutch pedal is depressed and released). Accordingly, if the operation to disengage and engage the clutch mechanism is not performed when the gear position estimated by the gear position estimation means changes, it is determined that the internal combustion engine is not connected to the driving wheels, that is, the manual transmission is in neutral. Thus, according to the first aspect of the invention, whether the manual transmission is in neutral may be determined by determining the change in the estimated gear position, and determining whether the clutch operation is performed. Thus, it may be determined whether the manual transmission is in neutral without the need for a neutral switch. Further, in a situation where there is almost no change in the vehicle speed, and there is only a slight change in the ratio between the rotational speed of the internal combustion engine and the vehicle speed ("N:V"), for example, in a situation where the vehicle travels on a gradual downward slope, it may be accurately determined that the manual transmission is in neutral by determining whether the driver has performed a clutch operation, and the change in the estimated gear position.

A second aspect of the invention relates to a gear position determination apparatus for a manual transmission connected to the output shaft of an internal combustion engine via a clutch mechanism, and the gear position determination apparatus determines the current gear position of the manual transmission. The gear position determination apparatus includes gear position estimation means for estimating the gear position of the manual transmission; and neutral determination means for determining whether the manual transmission is in neutral. The neutral determination means determines that the manual transmission is in neutral if the gear position estimated by the gear position estimation means changes after the clutch mechanism is engaged, when the driver performs a clutch operation.

With the configuration, whether the manual transmission is in neutral may be determined by determining whether the estimated gear position has changed and whether the driver has performed a clutch operation. That is, when the manual transmission is placed in neutral, the timing at which the estimated gear position changes does not necessarily match the timing at which the clutch mechanism is engaged. Ordinarily, the estimated gear position changes after the clutch mechanism is engaged. When such a situation is detected, it is determined that the manual transmission is in neutral. Thus, it is determined that the manual transmission is in neutral, without the need for a neutral switch. Further, when there is almost no change in the vehicle speed, and there is only a slight change in the N:V ratio, for example, in the situation where the vehicle travels on a gradual downward slope, it is accurately determined that the manual transmission is in neutral by determining whether the driver has performed a clutch operation, and whether the estimated gear position has changed.

More specifically, the gear position estimation means may have the following configuration. That is, the gear position estimation means may estimate the gear position of the manual transmission based on a vehicle speed or the rotational speed of the output side of the transmission, and the rotational speed of the internal combustion engine or the rotational speed of the input side of the transmission. When the clutch is engaged, the ratio between the vehicle speed or the rotational speed of the output side of the transmission, and the rotational speed of the internal combustion engine or the rotational speed of the input side of the transmission is a constant ratio determined according to the gear position of the manual transmission. Therefore, the gear position is accurately estimated based on the relation between the speeds. More specifically, the rotational speed of the internal combustion engine or the rotational speed of the input side of the transmission may be taken as the rotational speed of the crankshaft of the internal combustion engine. The vehicle speed or the rotational speed of the output side of the transmission may be the rotational speed of the driving wheel of the vehicle, or the rotational speed of a shaft between the transmission and the driving wheel (for example, a propeller shaft or a drive shaft).

After it is determined that the manual transmission is in neutral, this determination is cancelled, for example, when an operation to disengage the clutch mechanism is performed. That is, whenever a shift lever is moved from the neutral position to a gear position in the manual transmission, the operation to disengage the clutch mechanism is performed. Therefore, the manual transmission remains in neutral until the operation to disengage the clutch mechanism is performed. Accordingly, the determination that the manual transmission is in neutral is maintained until driver disengages the clutch mechanism. If the operation to disengage the clutch mechanism is performed while the determination that the manual transmission is in neutral is maintained, there is a possibility that the driver is moving the shift lever from the neutral position to a desired gear position. Therefore, the determination that the manual transmission is in neutral is cancelled.

The gear-shift prompting apparatus that changes the state of the prompt according to the determination made by the above-described gear position determination apparatus according to the first or second aspect is also within the scope of the technical idea of the invention. That is, a third aspect of the invention relates to a gear-shift prompting apparatus for a vehicle equipped with a manual transmission. When the optimum gear of the manual transmission determined according to a driving state of the vehicle differs from the gear actually selected by the driver, a condition for providing a gear-shift prompt is satisfied, and the gear-shift prompting apparatus prompts the driver to perform a gear-shift operation to shift to the optimum gear. The gear-shift prompting apparatus includes gear-shift prompt stop means for stopping the provision of the gear-shift prompt to the driver when the gear-shift prompt stop means receives a signal from the neutral determination means of the gear position determination apparatus which indicates that the manual transmission is in neutral.

Thus, when the gear position determination apparatus determines that the manual transmission is in neutral, the gear-shift prompting apparatus stops providing the gear-shift prompt to the driver. This avoids a situation where although the driver may wish to stop the vehicle or wants the vehicle to coast, and accordingly the driver places the shift lever in the neutral position of the manual transmission, the gear-shift prompting apparatus continues to provide the gear-shift prompt. Therefore, it is possible to avoid confusing or annoying the driver, and to improve the usefulness of the gear-shift prompting apparatus.

According to the above-mentioned aspects of the invention, it is possible to determine whether the manual transmission is in neutral, based on the change in the estimated gear of the manual transmission and whether the driver has performed a clutch operation. Thus, it may be determined that the manual transmission is in neutral even under circumstance where the manual transmission would not be determined to be in neutral according to the amount of change in the above-described N:V ratio per unit time. Therefore, in the situation where the vehicle travels on a gradual downward slope, and the manual transmission is in neutral, it is accurately determined that the manual transmission is in neutral. This improves the reliability of the neutral determination operation. The gear-shift prompting apparatus may operate based on the determination that the manual transmission is in neutral. In this case, when it is determined that the manual transmission is in neutral, the gear-shift prompting apparatus stops providing the gear-shift prompt. This prevents the gear-shift prompting apparatus from unnecessarily providing the gear-shift prompt. As a result, the usefulness of the gear-shift prompting apparatus is improved.

### BRIEF DESCRIPTION OF THE DRAWINGS

The foregoing and further features and advantages of the invention will become apparent form the following description of example embodiments with reference to the accompanying drawings, wherein like numerals are used to represent like elements, and wherein: '
FIG. 1 is a lateral view of a vehicle according to one embodiment of the invention;
FIG. 2 is a front view showing an enlarged instrument cluster;
FIG. 3 is a block diagram showing the schematic configuration of a control system that includes a control device;
FIG. 4 is a diagram showing a shift map;
FIG 5 is a diagram showing a gear position estimation map;
FIG 6A is a diagram showing an upshift lamp and a downshift lamp, and a display when an upshift is required, and FIG 6B is a diagram showing the upshift lamp and the downshift lamp, and the display when a downshift is required; and
FIG. 7 is a flowchart showing processes of a neutral determination operation and a gear-shift prompt operation associated with the neutral determination operation.

### DETAILED DESCRIPTION OF EXAMPLE EMBODIMENTS

Hereinafter, an embodiment of the invention will be described with reference to the drawings. In the embodiment, a gear position determination apparatus according to the invention is used to operate a gear-shift prompting apparatus that prompts a driver to select the optimum gear. In the embodiment, the invention is applied to a manual transmission in which any one of forward five gears may be selected (i.e., a manual transmission with five speeds).

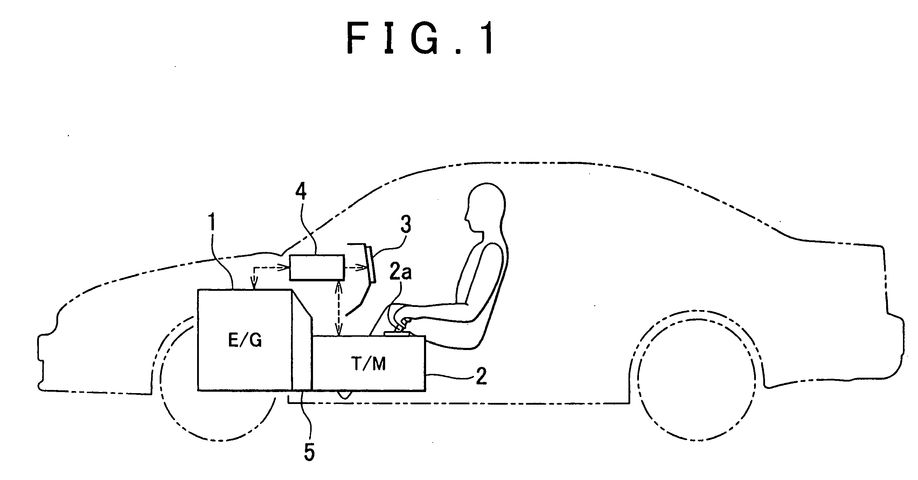

FIG. 1 is a lateral view of a vehicle, which shows the arrangement of an engine (internal combustion engine) 1, a clutch mechanism 5, a manual transmission 2, a instrument cluster 3, and a control device 4. The virtual line indicates the vehicle body.

When a driver depresses and releases a clutch pedal, the clutch mechanism 5 is disengaged and engaged. When the clutch mechanism 5 is engaged, the clutch mechanism 5 transmits driving force from the engine 1 to the manual transmission 2. When the clutch mechanism 5 is disengaged, the clutch mechanism 5 interrupts transmission of the driving force from the engine I to the manual transmission 2.

The manual transmission 2 has a gear configuration in which, for example, any one of forward five gears, and a reverse gear is achieved. A shift lever 2a protrudes in the passenger compartment. The driver performs a shift operation by manually operating the shift lever 2a.

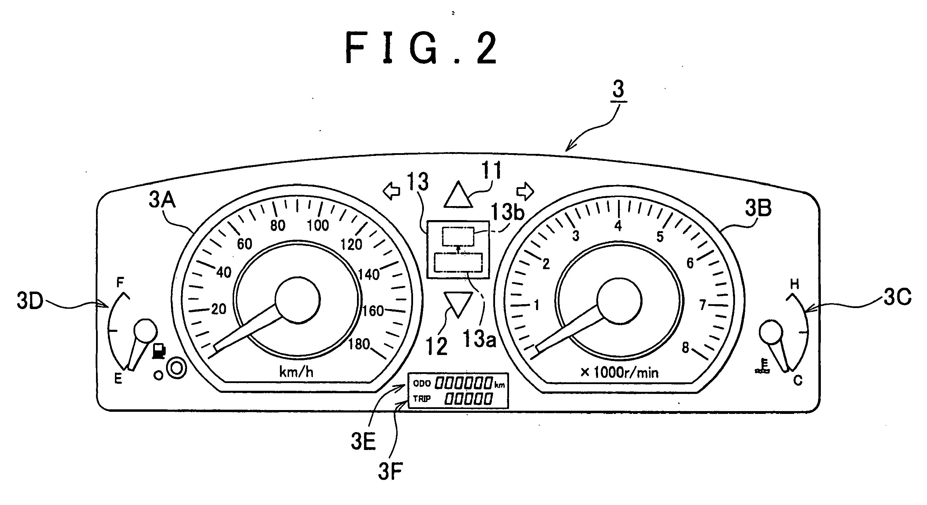

The instrument cluster 3 is disposed in the dashboard before the driver's seat in the passenger compartment. As shown in FIG 2, for example, a speedometer 3A, a tachometer 3B, a coolant temperature gauge 3C, a fuel gauge 3D, an odometer 3E, a trip meter 3F, and warning indicator lamps (not shown) are provided in the instrument cluster 3.

In the embodiment, the gear-shift prompting apparatus (driving advice system) is provided. The gear-shift prompting apparatus prompts the driver to select the gear position of the manual transmission 2 that is appropriate, for example, for improving fuel efficiency, according to the traveling state of the vehicle. Hereinafter, the gear-shift prompting apparatus will be described.

In the instrument cluster 3, an upshift lamp 11, a downshift lamp 12, and a display 13 are provided. The upshift lamp 11, downshift lamp 12, and display 13 are display portions that display a prompt to shift the gear (hereinafter, referred to as "gear-shift prompt"). The upshift lamp 11 is turned on when a gear shift to a higher gear position is appropriate. The downshift lamp 12 is turned on when a gear shift to a lower gear position is appropriate. The display 13 is a liquid crystal display or seven-segment display that displays information such as number and letters.

The lamps 11 and 12 may be configured using, for example, LEDs. The lamps 11 and 12 are turned on when needed. The lamps 11 and 12 may also flash. Alternatively, at least two kinds of illuminators may be provided in each of the lamps 11 and 12 so that light of a plurality of colors is emitted. In this case, each color has its own meaning. Further, instead of the lamps 11 and 12, a sound, a voice, or another suitable indicator may be used to provide the gear-shift prompt.

The display 13 includes a current gear position display portion 13a and a target gear position display portion 13b. The current gear position display portion 13a displays the current gear position of the manual transmission 2 using a number or a sign. The target gear position display portion 13b displays the gear position that should be selected by the driver (the gear position to which the manual transmission 2 should be shifted, hereinafter, referred to as "target gear position"), using a number or sign. For example, the indication of the current gear position does not flash on the current gear position display portion 13a, and the indication of the target gear position flashes on the target gear position display portion 13b.

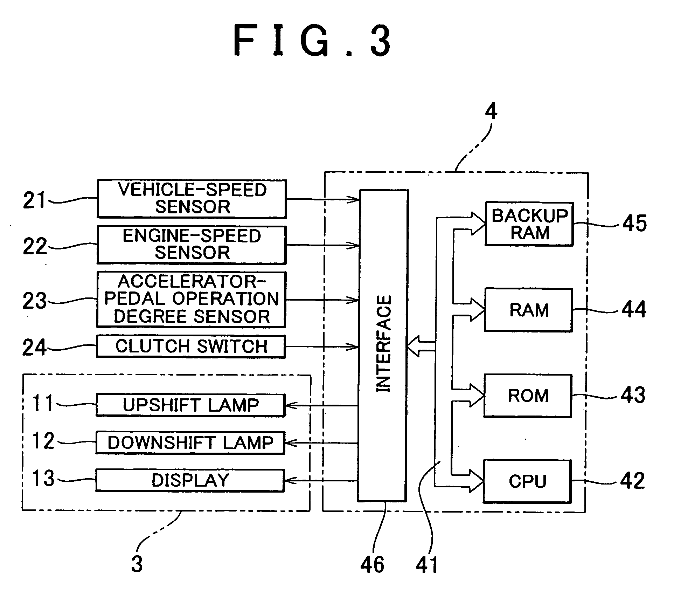

The control device 4 includes a ECU (Electronic Control Unit). For example, as shown in FIG. 3, the control device 4 includes a CPU 42, ROM 43, RAM 44, backup RAM 45, and an interface 46 that are connected to each other by a bi-directional bus 41.

The CPU 42 determines the traveling state of the vehicle, based on signals output from sensors (for example, a vehicle-speed sensor 21, an engine-speed sensor 22, and an accelerator-pedal operation degree sensor 23). The signals are input to the CPU 42 through the interface 46. The CPU 42 controls, for example, the amount of fuel injected from an injector (fuel injection valve), the opening/closing timings of intake/exhaust valves, and the ignition timing of an ignition plug, when needed. A clutch switch 24 is provided. The clutch switch 24 is turned on when the clutch pedal is depressed (i.e., when the clutch mechanism 5 is disengaged). The on/off signals output from the clutch switch 24 are also input to the CPU 42 through the interface 46.

The ROM 43 stores programs used to execute at least a gear-shift prompt control that prompts the driver to select the gear position of the manual transmission 2 that is appropriate, for example, for improving fuel efficiency, according to the traveling state of the vehicle, in addition to basic controls relating to the driving of the vehicle. The gear-shift prompt control will be specifically described later.

The RAM 44 is memory that temporarily stores, for example, the results of calculations performed by the CPU 42, and data input from the sensors. The backup RAM 45 is nonvolatile memory that stores data that should be retained.

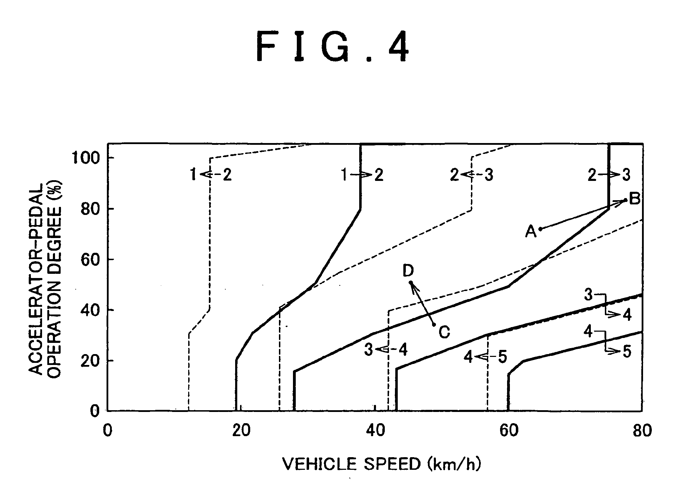

The ROM 43 stores a control map used for the gear-shift prompt control, that is, a shift map (FIG 4) used to determine the optimum gear based on the vehicle speed and the accelerator-pedal operation degree. In the shift map, shift lines (i.e., lines for gear shifts) are provided. The optimum gear for the traveling state of the vehicle is determined according to the shift map. When the determined gear (i.e., the target gear position) differs from the actual gear (i.e., the current gear position selected by the driver), the gear-shift prompt is provided using the lamp 11 or 12, and the target gear position display portion 13b of the display 13.

Thus, the upshift lamp 11, downshift lamp 12, display 13, and control device 4 constitute the gear-shift prompting apparatus.

The shift map will be described. FIG 4 shows an example of the shift map. In the shift map, a plurality of shift lines is provided. In FIG. 4, the solid lines indicate the shift lines that are used when an upshift operation is performed so that the manual transmission 2 upshifts to a higher gear. The dashed lines indicate the shift lines that are used when a downshift operation is performed so that the manual transmission 2 downshifts to a lower gear. In FIG 4, each upshift/downshift from one gear to another gear is indicated by the arrows and numbers.

As shown in FIG. 4, the shift lines used when the upshift operation is performed are set such that when the accelerator-pedal operation degree is low, the gear shift to a higher gear position is required at a low vehicle speed. For example, the shift lines are set such that when the accelerator-pedal operation degree is maintained at 20% after the vehicle starts, a gear shift from first gear to second gear is required at the vehicle speed of approximately 20 km/h, a gear shift from second gear to third gear is required at the vehicle speed of approximately 30 km/h, and a gear shift from third gear to fourth gear is required at the vehicle speed of approximately 45 km/h. Because the accelerator-pedal operation degree is low, it is determined that the driver does not request sharp acceleration. In this case, fuel efficiency is improved when the manual transmission 2 upshifts to a higher gear. Thus, in the shift map, the intervals between the shift lines are narrow in the region where the accelerator-pedal operation degree is low.

The shift lines are set such that when the accelerator-pedal operation degree is high, a gear shift is not required until the vehicle speed is high. For example, the shift lines are set such that when the accelerator-pedal operation degree is maintained at 80 % after the vehicle starts, the gear shift from first gear to second gear is not required until the vehicle speed reaches approximately 38 km/h, and the gear shift from second gear to third gear is not required until the vehicle speed reaches approximately 75 km/h. Because the accelerator-pedal operation degree is high, it is determined that the driver requests sharp acceleration. In this case, the vehicle is sharply accelerated when the manual transmission 2 is maintained in a low gear. Thus, in the shift map, the intervals between the shift lines are wide in the region where the accelerator-pedal operation degree is high.

The shift lines used when the downshift operation is performed are set such that the intervals between the shift lines are narrow in the region where the accelerator-pedal operation degree is low, and the intervals between the shift lines are wide in the region where the accelerator-pedal operation degree is high.

When the above-described gear-shift prompting apparatus provides the gear-shift prompt, it is necessary to compare the current gear position with the optimum gear (target gear position) determined using the above-described shift map. That is, when the current gear position is lower than the target gear position, an upshift prompt is provided. When the current gear position is higher than the target gear position, a downshift prompt is provided.

Thus, the configuration is made to determine the current gear position. In the embodiment, a method of determining the current gear position without the need for a neutral switch is employed. That is, in the embodiment, the current gear position may be estimated based on the engine speed and the vehicle speed.

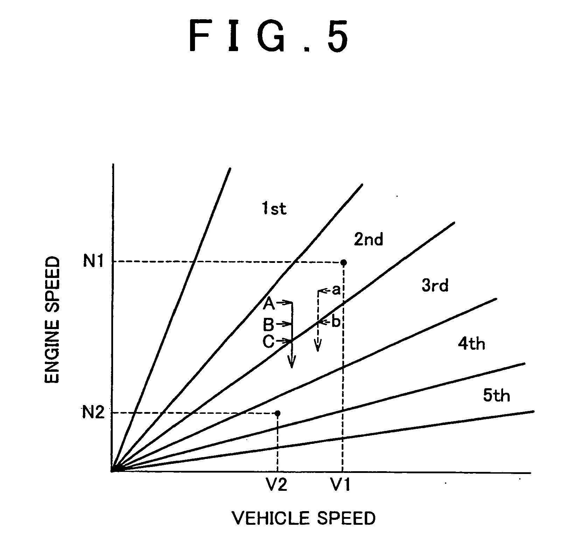

FIG. 5 shows an example of a gear position estimation map used to estimate the current gear position. That is, the current gear position may be estimated using the gear position estimation map based on the detected engine speed and the detected vehicle speed. For example, when the engine speed is N1 and the vehicle speed is V1 in FIG 5, it is estimated that the manual transmission 2 is in second gear. When the engine speed is N2, and the vehicle speed is V2, it is estimated that the manual transmission 2 is in fourth gear.

In the above description, the current gear position is estimated using the gear position estimation map based on the engine speed information and the vehicle speed information. Alternatively, the current gear position may be determined using an equation in which the engine speed and engine speed are used.

Next, the basic operation for providing the gear-shift prompt, which is performed by the gear-shift prompting apparatus thus configured, will be described.

The control device 4 determines the current gear position estimated by applying the engine speed information and the vehicle speed information to the gear position estimation map. Then, the control device 4 displays the number that represents the current gear position on the current gear position display portion 13a of the display 13.

Then, the control device 4 executes the gear-shift prompt control. More specifically, the control device 4 determines the traveling state of the vehicle based on the signals output from the vehicle-speed sensor 21 and the accelerator-pedal operation degree sensor 23. Then, the control device 4 reads the gear that is appropriate, for example, for improving the fuel efficiency (i.e., the optimum gear), from the shift map (FIG 4). Thus, the control device 4 determines whether the shift operation needs to be performed.

When a gear shift is not required, and accordingly it is preferable that the manual transmission 2 should remain in the current gear position (i.e., when the current gear position is appropriate), both the upshift lamp 11 and downshift lamp 12 are turned off, and the target gear position is not displayed on the target gear position display portion 13b.

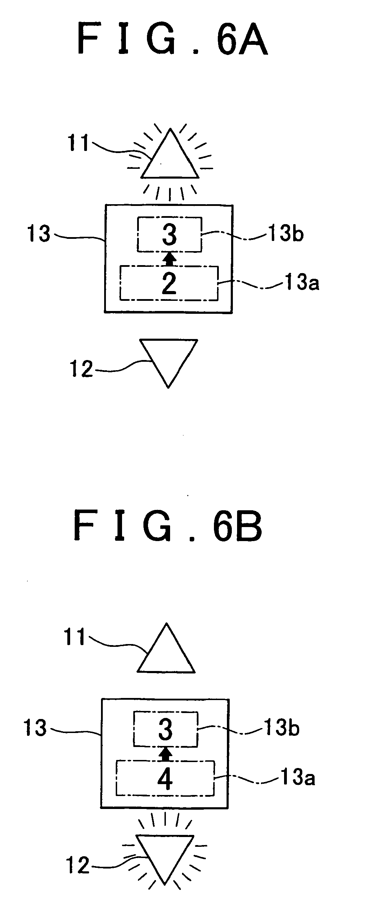

When the manual transmission 2 should be upshifted, the upshift lamp 11 is turned on as shown in FIG. 6A, and the target gear position is displayed on the target gear position display portion 13b. In FIG. 6A, the current gear position is second gear, and the target gear position is third gear. FIG. 6A shows, for example, the case where the vehicle travels while the manual transmission 2 is in second gear (i.e., while the engine speed is N1, and the vehicle speed is V1 in FIG. 5), and then the point that represents the driving state of the vehicle moves from point A to point B in FIG. 4.

When the manual transmission 2 should be downshifted, the downshift lamp 12 is turned on as shown in FIG. 6B, and the target gear position is displayed on the target gear position display portion 13b. In FIG. 6B, the current gear position is fourth gear, and the target gear position is third gear. FIG. 6B shows, for example, the case where the vehicle travels while the manual transmission 2 is in fourth gear (i.e., while the engine speed is N2, and the vehicle speed is V2 in FIG. 5), and then the point that represents the driving state of the vehicle moves from point C to point D in FIG. 4.

When the driver performs the shift operation to shift to the gear indicated by the prompt, the gear-shift prompting apparatus stops providing the gear-shift prompt. Accordingly, the lamp 11 or 12 is turned off, and the target gear position is not displayed on the target gear position display portion 13b. The lamp 11 or 12 may remain on and the target gear position may continue to be displayed in the target gear position display portion 13b until the driver performs the shift operation for shifting to the appropriate gear. Alternatively, the lamp 11 or 12 may be turned off and the target gear position may not be displayed on the target gear position display portion 13b, when the lamp 11 or 12 is on and the target gear position is displayed on the target gear position display portion 13b for a predetermined time, but the shift operation is not performed.

The feature of the embodiment is an operation for determining that the manual transmission 2 is in neutral (i.e., a neutral determination operation). The neutral determination operation is performed so that when the driver places the shift lever 2a in a neutral position, and accordingly the manual transmission 2 is in neutral, the gear-shift prompting apparatus stops providing the gear-shift prompt. When the driver places the shift lever 2a in the neutral position, it is determined that the driver wants to stop the vehicle, or wants the vehicle to coast. In this case, if the gear-shift prompting apparatus continues providing the gear-shift prompt, the driver may become confused or annoyed. Therefore, in the embodiment, the gear-shift prompting apparatus stops providing the gear-shift prompt. Thus, the neutral determination operation performed in this case is the feature of the embodiment.

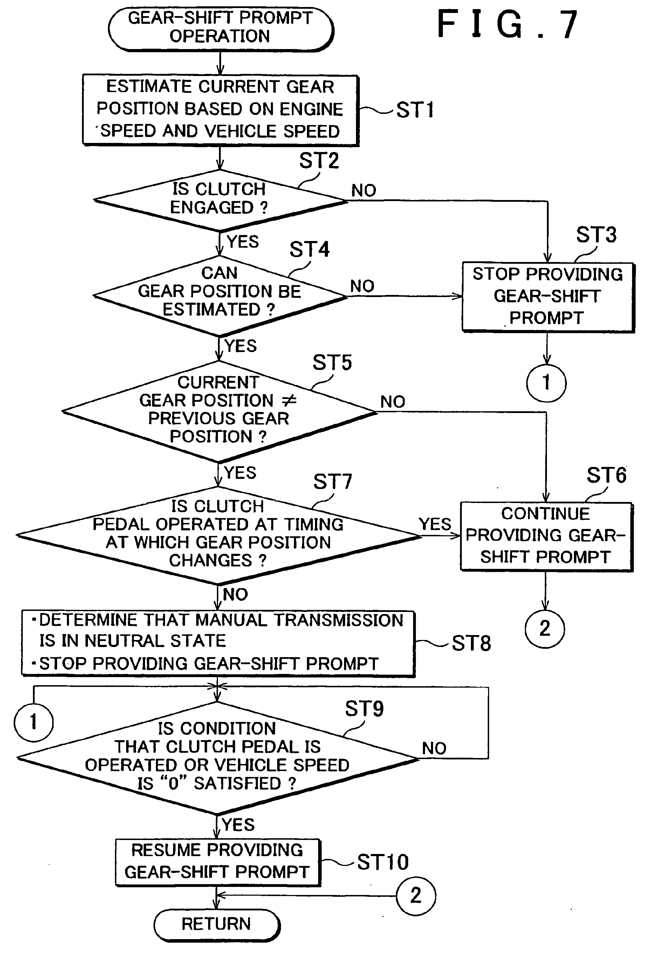

Hereinafter, the neutral determination operation and the operation to stop the provision of the gear-shift prompt (GSP) associated with the neutral determination operation will be described with reference to the flowchart in FIG 7. The operation shown in FIG. 7 is executed at predetermined time intervals, for example, at time intervals of several msec, after the engine starts. The operation shown in FIG 7 may be executed at intervals of a predetermined crank angle.

First, in step ST1, the current gear position is estimated. As described above, the current gear position is estimated using the gear position estimation map shown in FIG. 5based on the detected engine speed (N) and the detected vehicle speed (V).

After the current gear position is thus estimated, it is determined whether the clutch mechanism 5 is engaged based on the signal from the clutch switch 24 in step ST2. If the driver depresses the clutch pedal, and accordingly it is determined that the clutch mechanism 5 is disengaged (i.e., a negative determination is made) in step ST2, the operation proceeds to step ST3. In step ST3, the gear-shift prompting apparatus stops providing the gear-shift prompt. When the clutch mechanism 5 is disengaged, it is not possible to estimate the current gear position, and therefore, it is determined that is would be inappropriate to provide the gear-shift prompt of the gear-shift prompting apparatus in this situation.

When it is determined that the clutch mechanism 5 is engaged (i.e., an affirmative determination is made) in step ST2, the operation proceeds to step ST4. In step ST4, it is determined whether the point that represents the current engine speed and current vehicle speed is in a range where the current gear position can be estimated. That is, it is determined whether the point that represents the current engine speed and current vehicle speed is in the range of the first gear to fifth gear in FIG. 5.

When it is determined that the point that represents the current engine speed and current vehicle speed is not in the range where the current gear position can be estimated ("NO" in step ST4), it is determined that the current gear position is not one of the first to fifth gear positions. Therefore, the operation proceeds to step ST3. In step ST3, the gear-shift prompting apparatus stops providing the gear-shift prompt (i.e., the lamps 11 and 12 are turned off, and the target gear position is not displayed on the target gear position display portion 13b). When it is determined that the current gear position is not one of the first to fifth gear positions, it is determined that the manual transmission 2 is in neutral or reverse. In this situation, the driver may be confused if the gear-shift prompting apparatus provides the gear-shift prompt. Thus, the gear-shift prompting apparatus stops providing the gear-shift prompt.

When it is determined that the point that represents the current engine speed and current vehicle speed is in the range in which the current gear position can be estimated ("YES" in step ST4), the operation proceeds to step ST5. In step ST5, the current gear position is estimated using the gear position estimation map shown in FIG. 5, and it is determined whether the newly-estimated current gear position differs from the gear position estimated in an immediately preceding iteration of the operation.

When it is determined that the newly-estimated current gear position is the same as the gear position estimated in the immediately preceding iteration of the operation (i.e., a negative determination is made) in step ST5, the operation proceeds to step ST6. In step ST6, the gear-shift prompting apparatus continues providing the ordinary gear-shift prompt. That is, the gear-shift prompt is provided (i.e., the lamp 11 or 12 is turned on, and the target gear position is displayed on the target gear position display portion 13b) to shift to the target gear position, based on the comparison of the current gear position and the target gear position.

When it is determined that the newly-estimated current gear position differs from the gear position estimated in the immediately preceding iteration of the operation (i.e., an affirmative determination is made) in step ST5, the operation proceeds to step ST7. In step ST7, it is determined whether the clutch pedal is operated when the estimated gear position changes from the gear position estimated in the immediately preceding iteration of the operation to the newly-estimated current gear position. That is, it is determined whether the on/off signal is received from the clutch switch 24 when the estimated gear position is changed. More specifically, it is determined whether the clutch pedal is operated (i.e., depressed/released) within a predetermined time (for example, within several msec) immediately before the time at which the estimated gear position changes from the gear position estimated in the immediately preceding iteration of the operation to the newly-estimated current gear position.

When, for example, it is determined that the clutch pedal is depressed ("YES" in step ST7), the operation proceeds to step ST6. In step ST6, the gear-shift prompting apparatus continues providing the ordinary gear-shift prompt. That is, the gear-shift prompt is provided to achieve the target gear position (i.e., the lamp 11 or 12 is turned on and the target gear position is displayed on the target gear position display portion 13b), based on the result of comparison between the current gear position and the target gear position.

When it is determined that the clutch pedal is not depressed ("NO" in step ST7) and the estimated gear position changes (i.e., the newly-estimated current gear position is different from the gear position estimated in the immediately preceding operation), the operation proceeds to step ST8. In step ST8, the neutral determination means determines that the manual transmission 2 is in neutral. Then, because it is determined that the manual transmission 2 is in neutral, the gear-shift prompting apparatus stops providing the gear-shift prompt (i.e., the lamps 11 and 12 are turned off, and the target gear position is not displayed on the target gear position display portion 13b). If the manual transmission 2 is in neutral, and the gear-shift prompting apparatus provides the gear-shift prompt, the driver may be annoyed. Therefore, the gear-shift prompting apparatus stops providing the gear-shift prompt (i.e., the gear shift prompting apparatus stop means stops provision of the gear-shift prompt to the driver).

The principle of the neutral determination operation will be more specifically described. To facilitate understanding, the shift from second gear to third gear will be compared with the shift from second gear to neutral.

In an ordinary shift from second gear to third gear, the clutch pedal is depressed while the transmission is still in second gear, and thus the clutch mechanism 5 is disengaged. Then, the shift lever 2a is operated to select third gear, and then the clutch pedal is released, and thus the clutch mechanism 5 is engaged. In this case, the clutch mechanism 5 is disengaged at timing "a", and engaged at timing "b", as shown by the dash arrow in FIG. 5. That is, the timing at which the estimated gear position changes from the gear position estimated in the immediately preceding iteration of the operation to the newly-estimated current gear position is substantially the same as the timing at which the clutch mechanism 5 is engaged.

When the shift operation for shifting from second gear to neutral is performed, the clutch pedal is depressed while the transmission is still in second gear and thus the clutch mechanism 5 is disengaged. Then, the shift lever 2a is moved to the neutral position, and then the clutch pedal is released, and thus the clutch mechanism 5 is engaged. In this case, for example, the clutch mechanism 5 is disengaged at timing "A", and engaged at timing "B" as shown by the solid line in FIG. 5. As a result, the engine speed decreases toward an idling speed, and the estimated gear position changes from the gear position estimated in the immediately preceding iteration of the operation to the current gear position at timing "C": That is, the timing at which the estimated gear position changes from the gear position estimated in the immediately preceding iteration of the operation to the newly-estimated current gear position is not necessarily the same as the timing at which the clutch mechanism 5 is engaged.

When such a situation is detected, it is determined that the manual transmission 2 is in neutral, and the gear-shift prompting apparatus stops providing the gear-shift prompt in the embodiment. The situation where the vehicle speed does not change and only the engine speed decreases has been described to facilitate understanding. However, the situation that occurs when the estimated gear position changes from the gear position estimated in the immediately preceding iteration of the operation to the newly-estimated current gear position is not limited to this situation. In the neutral determination operation according to the embodiment, if the clutch pedal is not operated when the estimated gear position changes, it is determined that the manual transmission 2 is in neutral, and the gear-shift prompting apparatus stops providing the gear-shift prompt, regardless of the situation that occurs when the estimated gear position changes. Further, in the neutral determination operation, when there is almost no change in the vehicle speed, and only the engine speed decreases, and the estimated gear position changes, it is determined that the manual transmission 2 is in neutral. Therefore, it is determined that the manual transmission 2 is in neutral immediately after the driver moves the shift lever 2a to the neutral position. Thus, it is possible to quickly stop the gear-shift prompting apparatus from providing the gear-shift prompt.

After the gear-shift prompting apparatus stops providing the gear-shift prompt, the operation proceeds to step ST9. In step ST9, it is determined whether the clutch pedal is depressed or the vehicle speed is "0" thereafter. The determination that that the manual transmission 2 is in neutral is maintained, and the gear-shift prompting apparatus stops providing the gear-shift prompt until an affirmative determination is made in step ST9. When the clutch pedal is depressed or the vehicle speed is "0"; and accordingly an affirmative determination is made in step ST9, the gear-shift prompting apparatus restarts providing the gear-shift prompt. That is, the operation for providing the ordinary gear-shift prompt is restarted (step ST10). If the gear-shift prompting apparatus stops providing the gear-shift prompt in step ST3 as well, when the clutch pedal is depressed or the vehicle speed is "0", the gear-shift prompting apparatus resumes providing the gear-shift prompt.

As described above, in the embodiment, it is determined that the manual transmission 2 is in neutral in the situation where it is not determined that the manual transmission 2 is in neutral if the conventional neutral determination operation is performed based on the amount of change in the above-described N:V ratio per unit time. In the embodiment, for example, in a situation where the vehicle travels on a gradual downward slope, and the manual transmission 2 is in neutral, it is accurately determined that the manual transmission 2 is in neutral. This improves the reliability of the neutral determination operation.

The gear-shift prompting apparatus operates based on the determination that the manual transmission 2 is in neutral. That is, when it is determined that the manual transmission 2 is in neutral, the gear-shift prompting apparatus stops providing the gear-shift prompt. This prevents the gear-shift prompting apparatus from unnecessarily providing the gear-shift prompt, and accordingly prevents the driver from feeling confused or annoyed. Thus, the usefulness of the gear-shift prompting apparatus is improved.

In the above-described embodiment, the invention is applied to the vehicle that includes the manual transmission 2. However, the invention is not limited to the vehicle that includes the manual transmission 2. For example, the invention may be applied to a vehicle that includes an automatic transmission with a manual shift function, which is regarded as one type of manual transmissions. The automatic transmission with the manual shift function is widely used. An example of the automatic transmission with the manual shift function is an automatic transmission that has a so-called "sequential shift mode". In the sequential shift mode, the shift lever is moved forward and rearward (or rearward and forward) so that the transmission upshifts and downshifts, respectively.

In the above-described embodiment, the lamps 11 and 12, and the display 13, which display the gear-shift prompt, are provided in the instrument cluster 3. However, the location where the lamps 11 and 12 and the display 13 are provided is not limited to a specific location. For example, instead of providing the lamps 11 and 12 and the display 13 in the instrument cluster 3, the lamps 11 and 12 and the display 13 may be provided near the instrument cluster 3. In addition, the gear-shift prompt may be displayed using a commonly known navigation system, or a head-up display system that projects information on a windshield.

In the above-described embodiment, the invention is applied to the manual transmission with five speeds: However, the transmission to which the invention is applied is not limited to the manual transmission with five speeds. The invention may be applied to a manual transmission with four or less speeds, or a manual transmission with six or more speeds. The engine 1 combined with the manual transmission 2 is not limited to the gasoline engine. That is, a diesel engine may be combined with the manual transmission 2.

Further, in the embodiment, the gear position of the manual transmission 2 is estimated based on the engine speed and the vehicle speed. However, the invention may be applied to a vehicle that includes a position sensor that directly detects the gear position. In this case, if a failure occurs in the position sensor (e.g., a neutral switch), it is accurately determined that the manual transmission 2 is in neutral, and accordingly the gear-shift prompting apparatus stops providing the gear-shift prompt.

In addition, in the embodiment, the gear position determination apparatus according to the embodiment is used to operate the gear-shift prompting apparatus. However, the gear position determination apparatus is not necessarily used for this purpose. The determination that the transmission is in neutral may be used for other purposes. For example, when it is determined that the transmission is in neutral, the control state of the engine 1 may be changed.

## Claims

1. A gear position determination apparatus for a manual transmission (2), connected to an output shaft of an internal combustion engine (1) via a clutch mechanism (5), that determines a current gear position of the manual transmission, the gear position determination apparatus comprising:
gear position estimation means (4, ST1) for estimating a gear position of the manual transmission (2); and **characterized by**
neutral determination means (4, ST8) for determining whether the manual transmission is in neutral, wherein the neutral determination means determines whether an operation to disengage and engage the clutch mechanism is performed when the clutch mechanism is engaged and the gear position estimated by the gear position estimation means changes (ST7); and the neutral determination means determines that the manual transmission (2) is in neutral if it is determined that the operation to disengage and engage the clutch mechanism is not performed when the clutch mechanism is engaged and the gear position estimated by the gear position estimation means changes.

2. The gear position determination apparatus for the manual transmission according to claim 1, wherein the gear position estimation means (4, ST1) estimates the gear position of the manual transmission (2) based on one of a vehicle speed and a rotational speed of an output side of the transmission, and one of a rotational speed of the internal combustion engine and a rotational speed of an input side of the transmission.

3. The gear position determination apparatus for the manual transmission according to claim 1 or 2, wherein the neutral determination means maintains a determination that the manual transmission is in neutral over a period of time from when the neutral determination means (4, ST8) determines that the manual transmission is in neutral until the operation to disengage and engage the clutch mechanism is performed.

4. A gear-shift prompting apparatus for a vehicle that includes a manual transmission (2), wherein, when an optimum gear of the manual transmission determined according to a driving state of the vehicle differs from a gear selected by a driver the gear-shift prompting apparatus provides the gear-shift prompt to the driver to shift to the optimum gear, **characterized by** comprising
gear-shift prompt stop means (4, ST8) for stopping the provision of the gear-shift prompt to the driver when the gear-shift prompt stop means receives a signal from the neutral determination means of the gear position determination apparatus according to any one of claims 1 to 3 indicating that the manual transmission is in neutral.

5. The gear-shift prompting apparatus according to claim 4, wherein the gear-shift prompt stop means (4, ST3) also stops the provision of the gear-shift prompt to the driver when it is determined that the clutch mechanism is disengaged.

6. The gear-shift prompting apparatus according to claim 4 or 5, wherein the gear-shift prompt stop means (4, ST3) also stops the provision of the gear-shift prompt to the driver when it is determined the clutch mechanism is engaged, and when it is determined that one of the vehicle speed and the rotational speed of the output side of the transmission, and one of the rotational speed of the internal combustion engine and the rotational speed of the input of the transmission, which are used to estimate the gear position of the manual transmission, are not in a range in which the gear position can be estimated by the gear position estimation means.

7. A gear-shift prompting apparatus according to any one of claims 4 to 6,
wherein a display (11, 12, 13b) that displays the gear-shift prompt is provided before a driver's seat in a passenger compartment, and the gear-shift prompt stop means (4, ST8) stops the display to display the gear-shift prompt.

8. A method for determining a gear position in a transmission, comprising:
determining an optimum transmission gear, based on a driving state of the vehicle;
estimating a current transmission gear position;
determining whether the transmission is in neutral, wherein it is determined whether an operation to disengage and engage a clutch mechanism has been executed when the clutch mechanism is engaged and the estimated gear position changes;
it is determined that the operation to disengage and engage the clutch mechanism is not performed when the clutch mechanism is engaged and the gear position estimated by the gear position estimation means changes;
providing a gear shift prompt to the driver when the optimum transmission gear is different from the current transmission gear position; and
canceling gear-shift prompt to the driver if it is determined that the transmission is in neutral.

## Patentansprüche

1. Getriebepositionsbestimmungsgerät für ein manuelles Getriebe (2), das mit einer Ausgangswelle einer Brennkraftmaschine (1) über einen Kupplungsmechanismus (5) verbunden ist, das eine gegenwärtige Getriebeposition des manuellen Getriebes bestimmt, wobei das Getriebepositionsbestimmungsgerät folgendes aufweist:
eine Getriebepositionsschätzeinrichtung (4, ST1) zum Schätzen einer Getriebeposition des manuellen Getriebes (2); und
**gekennzeichnet, durch**
eine Leerlaufbestimmungseinrichtung (4, ST8) zum Bestimmen, ob das manuelle Getriebe im Leerlauf ist, wobei die Leerlaufbestimmungseinrichtung bestimmt, ob eine Betätigung zum Ausrücken und Einrücken des Kupplungsmechanismus durchgeführt ist, wenn der Kupplungsmechanismus eingerückt ist und die Getriebeposition, die **durch** die Getriebepositionsschätzeinrichtung geschätzt ist, sich ändert (ST7); und die Leerlaufbestimmungseinrichtung bestimmt, dass das manuelle Getriebe (2) im Leerlauf ist, falls es bestimmt ist, dass die Betätigung zum Ausrücken und Einrücken des Kupplungsmechanismus nicht durchgeführt ist, wenn der Kupplungsmechanismus eingerückt ist und sich die Getriebeposition, die **durch** die Getriebepositionsschätzeinrichtung geschätzt ist, ändert.

2. Getriebepositionsbestimmungsgerät für das manuelles Getriebe (2) nach Anspruch 1, wobei die Getriebepositionsschätzeinrichtung (4, ST1) die Getriebeposition des manuellen Getriebes (2) basierend auf einer von einer Fahrzeuggeschwindigkeit und einer Drehzahl einer Ausgangsseite des Getriebes und einer von einer Drehzahl der Brennkraftmaschine und einer Drehzahl einer Eingangsseite des Getriebes schätzt.

3. Getriebepositionsbestimmungsgerät für das manuelles Getriebe nach Anspruch 1 oder 2, wobei die Leerlaufbestimmungseinrichtung eine Bestimmung, dass das manuelle Getriebe im Leerlauf ist, über eine Zeitdauer von einem Zeitpunkt an, wenn die Leerlaufbestimmungseinrichtung (4, ST8) bestimmt, dass das manuelle Getriebe im Leerlauf ist, bis die Betätigung zum Ausrücken und Einrücken des Kupplungsmechanismus durchgeführt ist, beibehält.

4. Gangschaltaufforderungsgerät für ein Fahrzeug, das ein manuelles Getriebe (2) aufweist, wobei dann, wenn ein optimaler Gang des manuellen Getriebes, der entsprechend einem Fahrzustand des Fahrzeugs bestimmt ist, von einem Gang abweicht, der durch einen Fahrer gewählt ist, das Gangschaltaufforderungsgerät die Gangschaltaufforderung an den Fahrer liefert, um zu dem optimalen Gang zu schalten, **gekennzeichnet, durch**
eine Gangschaltaufforderungsstoppeinrichtung (4, ST8) zum Stoppen der Bereitstellung der Gangschaltaufforderung an den Fahrer, wenn die Gangschaltaufforderungsstoppeinrichtung ein Signal von der Leerlaufbestimmungseinrichtung des Getriebepositionsbestimmungsgeräts gemäß einem der Ansprüche 1 bis 3 empfängt, das anzeigt, dass das manuelles Getriebe im Leerlauf ist.

5. Gangschaltaufforderungsgerät nach Anspruch 4, wobei die Gangschaltaufforderungsstoppeinrichtung (4, ST3) außerdem die Bereitstellung der Gangschaltaufforderung an den Fahrer stoppt, wenn bestimmt ist, dass der Kupplungsmechanismus ausgerückt ist.

6. Gangschaltaufforderungsgerät nach Anspruch 4 oder 5, wobei die Gangschaltaufforderungsstoppeinrichtung (4, ST3) außerdem die Bereitstellung der Gangschaltaufforderung an den Fahrer stoppt, wenn bestimmt ist, dass der Kupplungsmechanismus eingerückt ist, und wenn bestimmt ist, dass eines von der Fahrzeuggeschwindigkeit und der Drehzahl der Ausgangsseite des Getriebes und eines von der Drehzahl der Brennkraftmaschine und der Drehzahl des Eingangs des Getriebes, die verwendet sind, um die Getriebeposition des manuellen Getriebes zu schätzen, nicht in einem Bereich sind, in dem die Getriebeposition durch die Getriebepositionsschätzeinrichtung geschätzt werden kann.

7. Gangschaltaufforderungsgerät nach einem der Ansprüche 4 bis 6, wobei eine Anzeige (11, 12, 13b), die die Gangschaltaufforderung anzeigt, vor einem Fahrersitz in einem Passagierabteil vorgesehen ist und die Gangschaltaufforderungsstoppeinrichtung (4, ST8) die Anzeige zum Anzeigen der Gangschaltaufforderung stoppt.

8. Verfahren zum Bestimmen einer Getriebeposition in einem Getriebe, das Folgendes aufweist:
Bestimmen eines optimalen Getriebegangs basierend auf einem Antriebszustand des Fahrzeugs;
Schätzen einer derzeitigen Getriebegangposition;
Bestimmen, ob das Getriebe im Leerlauf ist, wobei bestimmt wird, ob eine Betätigung zum Ausrücken und Einrücken eines Kupplungsmechanismus ausgeführt wurde, wenn der Kupplungsmechanismus eingerückt ist und sich die geschätzte Gangposition ändert;
es bestimmt wird, dass die Betätigung zum Ausrücken und Einrücken des Kupplungsmechanismus nicht durchgeführt ist, wenn der Kupplungsmechanismus eingerückt ist und sich die Gangposition, die durch die Gangpositionsschätzeinrichtung geschätzt ist, ändert;
Vorsehen einer Gangschaltaufforderung an den Fahrer, wenn der optimale Getriebegang von der derzeitigen Getriebegangposition verschieden ist; und
Aufheben der Gangschaltaufforderung an den Fahrer, falls bestimmt ist, dass das Getriebe im Leerlauf ist.

## Revendications

1. Appareil de détermination de position de rapport de vitesse pour une transmission manuelle (2), relié à un arbre de sortie d'un moteur à combustion interne (1) par le biais d'un mécanisme d'embrayage (5), qui détermine une position de rapport de vitesse en cours de la transmission manuelle, l'appareil de détermination de position de rapport de vitesse comprenant :
un moyen d'estimation de position de rapport de vitesse (4, ST1) pour estimer une position de rapport de vitesse de la transmission manuelle (2) ; et **caractérisé par** un moyen de détermination de point mort (4, ST8) pour déterminer si la transmission manuelle est au point mort, dans lequel le moyen de détermination de point mort détermine si une opération de débrayage et d'embrayage du mécanisme d'embrayage est effectuée lorsque le mécanisme d'embrayage est embrayé et la position de rapport de vitesse estimée par le moyen d'estimation de position de rapport de vitesse change (ST7) ; et le moyen de détermination de point mort détermine que la transmission manuelle (2) est au point mort s'il est déterminé que l'opération de débrayage et d'embrayage du mécanisme d'embrayage n'est pas effectuée lorsque le mécanisme d'embrayage est embrayé et la position de rapport de vitesse estimée par le moyen d'estimation de position de rapport de vitesse change.

2. Appareil de détermination de position de rapport de vitesse pour la transmission manuelle selon la revendication 1, dans lequel le moyen d'estimation de position de rapport de vitesse (4, ST1) estime la position de rapport de vitesse de la transmission manuelle (2) sur la base de l'un d'une vitesse de véhicule et d'un régime de rotation d'un côté de sortie de la transmission, et de l'un d'un régime de rotation du moteur à combustion interne et d'un régime de rotation d'un côté d'entrée de la transmission.

3. Appareil de détermination de position de rapport de vitesse pour la transmission manuelle selon la revendication 1 ou 2, dans lequel le moyen de détermination de point mort maintient une détermination que la transmission manuelle est au point mort pendant une période de temps du moment auquel le moyen de détermination de point mort (4, ST8) détermine que la transmission manuelle est au point mort jusqu'à l'exécution de l'opération de débrayage et d'embrayage du mécanisme d'embrayage.

4. Appareil d'avertissement de changement de rapport de vitesse pour un véhicule comprenant une transmission manuelle (2), dans lequel, lorsqu'un rapport de vitesse optimal de la transmission manuelle déterminé en fonction d'un état de conduite du véhicule diffère d'un rapport de vitesse sélectionné par un conducteur, l'appareil d'avertissement de changement de rapport de vitesse fournit l'avertissement de changement de rapport de vitesse au conducteur pour passer au rapport de vitesse optimal, **caractérisé en ce qu'**il comprend
un moyen d'arrêt d'avertissement de changement de rapport de vitesse (4, ST8) pour arrêter de fournir l'avertissement de changement de rapport de vitesse au conducteur lorsque le moyen d'arrêt d'avertissement de changement de rapport de vitesse reçoit un signal du moyen de détermination de point mort de l'appareil de détermination de position de rapport de vitesse selon l'une quelconque des revendications 1 à 3 indiquant que la transmission manuelle est au point mort.

5. Appareil d'avertissement de changement de rapport de vitesse selon la revendication 4, dans lequel le moyen d'arrêt d'avertissement de changement de rapport de vitesse (4, ST3) arrête également de fournir l'avertissement de changement de rapport de vitesse au conducteur lorsqu'il est déterminé que le mécanisme d'embrayage est débrayé.

6. Appareil d'avertissement de changement de rapport de vitesse selon la revendication 4 ou 5, dans lequel le moyen d'arrêt d'avertissement de changement de rapport de vitesse (4, ST3) arrête également de fournir l'avertissement de changement de rapport de vitesse au conducteur lorsqu'il est déterminé que le mécanisme d'embrayage est embrayé, et lorsqu'il est déterminé que l'un de la vitesse de véhicule et du régime de rotation du côté de sortie de la transmission, et l'un du régime de rotation du moteur à combustion interne et du régime de rotation de l'entrée de la transmission, qui sont utilisés pour estimer la position de rapport de vitesse de la transmission manuelle, ne sont pas dans une plage dans laquelle la position de rapport de vitesse peut être estimée par le moyen d'estimation de position de rapport de vitesse.

7. Appareil d'avertissement de changement de rapport de vitesse selon l'une quelconque des revendications 4 à 6, dans lequel un affichage (11, 12, 13b) qui affiche l'avertissement de changement de rapport de vitesse est fourni devant un siège de conducteur dans un compartiment de passagers, et le moyen d'arrêt d'avertissement de changement de rapport de vitesse (4, ST8) arrête l'affichage de l'avertissement de changement de rapport de vitesse par l'affichage.

8. Procédé de détermination d'une position de rapport de vitesse dans une transmission, comprenant :
la détermination d'un rapport de vitesse de transmission optimal sur la base d'un état de conduite du véhicule ;
l'estimation d'une position de rapport de vitesse de transmission en cours ;
la détermination si la transmission est au point mort, dans lequel il est déterminé si une opération de débrayage et d'embrayage d'un mécanisme d'embrayage a été exécutée lorsque le mécanisme d'embrayage est embrayé et la position de rapport de vitesse estimée change ;
il est déterminé que l'opération de débrayage et d'embrayage du mécanisme d'embrayage n'est pas effectuée lorsque le mécanisme d'embrayage est embrayé et la position de rapport de vitesse estimée par le moyen d'estimation de position de rapport de vitesse change ;
la fourniture d'un avertissement de changement de rapport de vitesse au conducteur lorsque le rapport de vitesse de transmission optimal est différent de la position de rapport de vitesse de transmission en cours ; et
l'annulation de l'avertissement de changement de rapport de vitesse au conducteur s'il est déterminé que la transmission est au point mort.
